# EUROPÄISCHE PATENTANMELDUNG

(11) **EP 1 849 659 A1**
(43) Veröffentlichungstag der Anmeldung: **31.10.2007**
(21) Anmeldenummer: 07450080.2
(22) Anmeldetag: 26.04.2007
(51) Int. Cl.: B60R 16/02, B60R 13/02

(54) **Fahrzeuginnenverkleidungsbauteil und Verfahren zum Herstellen desselben**

(30) Priorität: 28.04.2006 AT 7352006
(71) Anmelder: I & T GmbH, 7011 Siegendorf (AT)
(72) Erfinder: Röhrig, Lars, 70499 Stuttgart (DE); Rubitzsch, Holger, 73277 Owen (DE)
(74) Vertreter: Wildhack, Helmut

(57) **Zusammenfassung**

Die Erfindung betrifft ein Verfahren zum Herstellen eines Bauteils (1) für eine Fahrzeuginnenverkleidung, insbesondere eine Türinnenverkleidung, umfassend die folgenden Schritte:
- es wird ein Spritzgusswerkzeug (10) mit wenigstens einem Formnest (11) bereitgestellt;
- eine Formmasse (12), aus welcher das Bauteil (1) geformt werden soll, wird derart in das Spritzgusswerkzeug (19) eingebracht, dass sie sich im Formnest (11) vernetzt und/oder wenigstens teilweise oder vollständig aushärtet.

Das Verfahren ist dadurch gekennzeichnet, dass in das Formnest (11) wenigstens ein flexibles Flachkabel (2) mit einem oder einer Vielzahl von elektrischen und/oder optischen Leitern (3) derart eingebracht wird, dass es wenigstens teilweise formschlüssig von der vernetzenden und/oder aushärtenden Formmasse (12) umschlossen wird.

## Beschreibung

Die Erfindung betrifft vorrangig die Herstellung von Fahrzeuginnenverkleidungsbauteilen, im einzelnen ein Verfahren zum Herstellen eines solchen Bauteils und ein solches Bauteil selbst. Allgemein ist die Erfindung jedoch auch auf Bauteile von Innenverkleidungen anderer Transportmittel, beispielsweise von Flugzeugen, anwendbar. Gemäß einer besonderen Ausführung betrifft die vorliegende Erfindung eine Innenverkleidung einer Fahrzeugtüre beziehungsweise ein Herstellungsverfahren für eine solche.

In Fahrzeugen, insbesondere Kraftfahrzeugen, ist es notwendig, zahlreiche elektrische Leitungen in Form von Kabeln zu verlegen, um die verschiedenen elektrischen Verbraucher, Steuerungen und Stromquellen miteinander zu verbinden. Um solche Kabel an ihrer vorgegebenen Position zu halten, wobei sowohl funktionale als auch ästhetische Gesichtspunkte zu beachten sind, werden die Kabel herkömmlich durch Klemmen oder Kleben auf dem Trägermaterial des Innenverkleidungsbauteils, beispielsweise einer Türinnenverkleidung, befestigt. Das Trägermaterial, welches üblicherweise im Spritzgussverfahren aus Kunststoff geformt wird und daher im Rahmen der vorliegenden Beschreibung auch allgemein als Formmasse bezeichnet wird, weist zum Beispiel äußere Vorsprünge oder angeschraubte oder angesteckte Elemente auf, welche Klemmen ausbilden, hinter die das Kabel gesteckt beziehungsweise geklemmt werden kann.

Der Montageaufwand für die Befestigung der Kabel an dem Bauteil der Innenverkleidung ist daher groß und personalintensiv, und es kommt zudem immer wieder vor, dass sich das Kabel zumindest an einzelnen Stellen im Laufe der Gebrauchszeit eines Kraftfahrzeugs von dem Bauteil löst, weil es beispielsweise aus der Klemme herausrutscht oder die in der Regel zum Einlagen des Kabels einseitig geöffnete Klemme abbricht.

Ein weiterer Nachteil der herkömmlichen mit Kabeln versehenen Innenverkleidungsbauteile liegt darin, dass die Kabel an ihrem Ende mit einem "Elektro"-Stecker versehen werden müssen, der, in der Regel nach der Montage des Kabels an der Innenverkleidung, mit einem geeignet komplementär ausgebildeten Stecker eines externen Kabels verbunden werden muss, wobei das externe Kabel beispielsweise an einem Verbraucher angeschlossen ist, um die elektrischen Leitungen des an dem Innenverkleidungsbauteil befestigten Kabels elektrisch mit den Leitungen des externen Kabels zu verbinden.

Der Begriff "extern" im Rahmen der vorliegenden Beschreibung soll bedeuten, dass dieses Kabel an einem an dem Innenverkleidungsbauteil befestigten "internen" Kabel befestigt ist und von dem Innenverkleidungsbauteil wegführt, beispielsweise zu einem Verbraucher, einem Steuergerät oder einer Stromquelle. Ein solcher Verbraucher, wenn er im Zusammenhang mit der vorliegenden Erfindung genannt wird, kann beispielsweise ein Türsteuergerät, ein elektrischer Fensterheber, eine Beleuchtung wie eine Ausstiegbeleuchtung und ähnliches sein.

Auch wenn herkömmlich vor allem elektrische Leitungen in verschiedenen Kabeln in Kraftfahrzeugen montiert werden, ist die vorliegende Erfindung auch auf optische Leiter anwendbar, welche zur Übertragung optischer Signale dienen.

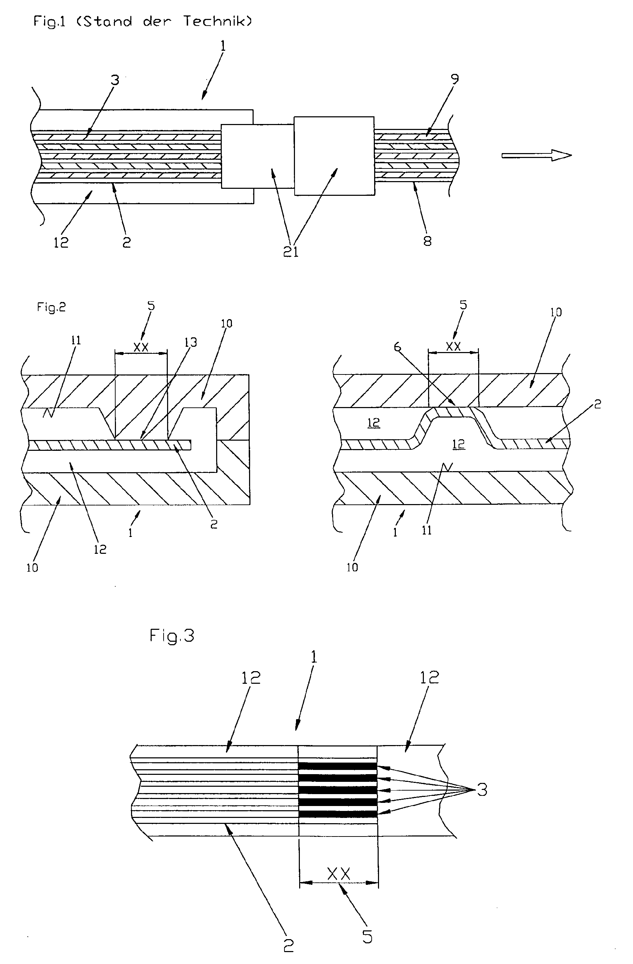

In der Figur 1 ist in einer schematischen Darstellung eine Ausführung gemäß dem Stand der Technik gezeigt. So ist von außen auf der Formmasse 12 eines Bauteils 1 für eine Fahrzeuginnenverkleidung, in der Regel auf der vom Fahrzeuginneren aus nicht sichtbaren Rückseite desselben, ein Kabel 2 mit einer Vielzahl von elektrischen Leitern 3 montiert. Das Kabel 2 ist beispielsweise auf der Formmasse 12 durch einen Klebstoff verklebt und insbesondere auf der Formmasse 2 durch geeignete Klemmvorrichtungen festgeklemmt oder festgeschraubt. Am Ende des Kabels 2 ist ein erster Stecker 21 - weil er eine elektrische Verbindung herstellt, auch als Elektrostecker bezeichnet -, montiert, welcher mit einem zweiten Stecker 21 eines externen Kabels 8, das eine Vielzahl von Leitungen 9 aufweist, die zu einem Verbraucher (siehe den Pfeil) führen, zusammengesteckt ist. Sowohl die Montage des Kabels 2 an der in der Regel bereits vollkommen ausgehärteten Formmasse 12 als auch die Herstellung und Montage der Stecker 21 führen zu hohen Produktionskosten.

*Die Offenlegungsschrift* DE 103 50 233 A1 *beschreibt einen Steckverbinder zur elektrischen Kontaktierung von Verbrauchern. Zur Montage des Steckverbinders wird ein Flachleiter an einem Fixierungselement positioniert. Anschließend wird ein Kontaktvermittler in eine Öffnung des Fixierungselements eingelegt, so dass seine Vorderseite den Flachleiter berührt. Das Fixierungselement wird schließlich zusammen mit dem eingelegten Kontaktvermittler und dem zwischen den beiden Bauteilen verlaufenden Flachleiter in die Oberschale oder die Unterschale eines Gehäuses eingelegt, und anschließend wird das Gehäuse so gefügt, dass der Flachleiter durch eine Öffnung des Gehäuses verläuft, und die Kontakte des Kontaktvermittlers zur Kontaktierung eines Verbrauchers von außen her durch eine zweite Öffnung des Gehäuses zugänglich sind.*

*Das umschließende Gehäuse mit dem Fixierungselement und dem Kontaktvermittler wird auch als Smart-Connector bezeichnet, der mit einem Flachleiter verbunden ist.*

*Die Montage dieses Smar-Connectors erfordert somit in mehreren Arbeitsschritten das Zusammenfügen von verschiedenen separaten Bauteilen.*

Der Erfindung liegt die Aufgabe zugrunde, ein Verfahren zum Herstellen eines Bauteils für eine Fahrzeuginnenverkleidung sowie ein entsprechendes Bauteil darzustellen, bei welchem die Befestigung eines Kabels mit elektrischen und/oder optischen Leitern kostengünstiger und zuverlässiger erfolgt.

Die erfindungsgemäße Aufgabe wird durch ein Verfahren und ein Bauteil gemäß den beiden unabhängigen Ansprüchen gelöst. Vorteilhafte und besonders zweckmäßige Ausgestaltungen der Erfindung sind Gegenstand der abhängigen Ansprüche.

Das erfindungsgemäße Verfahren zum Herstellen eines Bauteils für eine Fahrzeuginnenverkleidung wie eine Türverkleidung umfasst, wie es zunächst aus dem Stand der Technik bekannt ist, das Bereitstellen eines Spritzgusswerkzeuges, welches wenigstens ein Formnest oder auch eine Vielzahl von Formnestern aufweist. Eine Formmasse, beispielsweise aus Kunststoff, aus welcher das Bauteil der Fahrzeuginnenverkleidung geformt werden soll, wird derart in das Spritzgusswerkzeug eingebracht, in der Regel spritzgegossen oder extrudiert, dass es sich im Formnest vernetzt, um die Form auszubilden, und/oder teilweise, weitgehend oder vollständig aushärtet.

Das erfindungsgemäße Verfahren ist dadurch gekennzeichnet, dass das Kabel, welches insbesondere als flexibles Flachkabel ausgeführt ist, nicht erst dann an dem Bauteil befestigt wird, nachdem dieses hergestellt worden ist, sondern bereits in das Formnest des Spritzgusswerkzeuges eingelegt oder allgemein eingebracht wird, so dass sich die Formmasse bei ihrem Einbringen in das Formnest derart formschlüssig um das Kabel herum ansammelt und aushärtet, dass das Kabel von der Formmasse umschlossen und dadurch an dem Bauteil befestigt wird, insbesondere ohne dass vorher und/oder anschließend eine weitere Befestigung des Kabels an dem Bauteil oder der Formmasse desselben erfolgt.

Das erfindungsgemäße Verfahren wird insbesondere zum Verbinden eines flexiblen Flachkabels (auch FFC genannt), welches wenigstens einen oder in der Regel eine Vielzahl von elektrischen Leitern aufweist, die elektrisch isoliert und miteinander durch eine Kunststoffschicht zu einem Band verbunden sind, mit einem Innenverkleidungsbauteil verwendet. Die Kunststoffschicht ist insbesondere klebstofffrei und das Kabel kann ein flexibler, extrudierter Flachleiter sein, der aus folienartigen Kupferbändern besteht. Im Gegensatz zu laminierten Flachkabeln kann bei dieser Art von Herstellung auf die allgemein üblichen Kleber verzichtet werden.

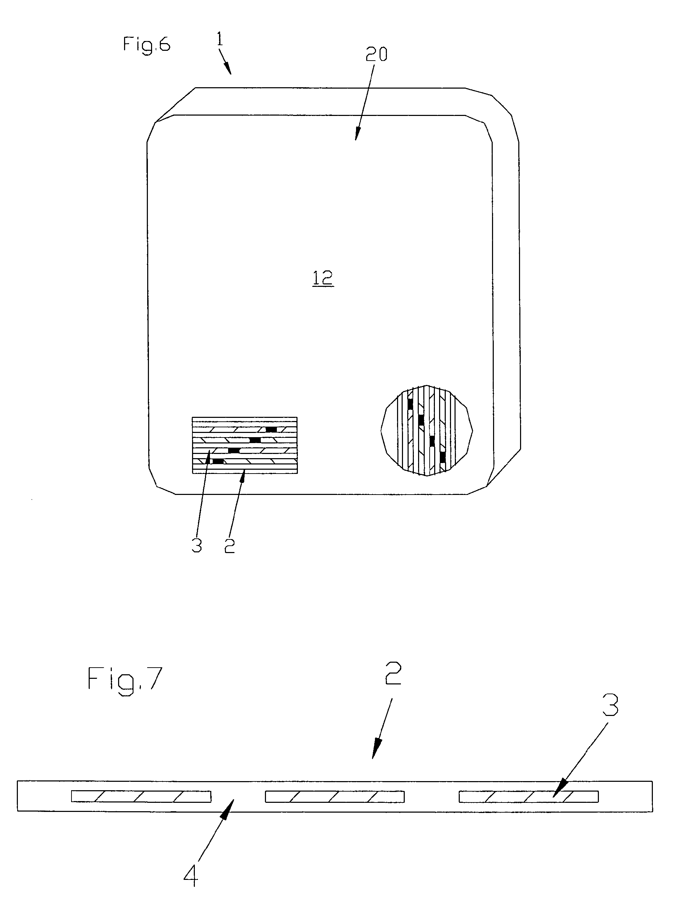

Das Kabel weist insbesondere einen oder mehrere elektrische Leiter auf, die einen eckigen Querschnitt, insbesondere rechteckigen Querschnitt haben. Insbesondere ist der Querschnitt rechteckig mit zwei langen Seiten, die in Richtung der Kabelbreite verlaufen, und mit zwei kurzen Seiten, die in Richtung der Kabelhöhe beziehungsweise der Kabeldicke verlaufen, ausgeführt, wie es später noch mit Bezug auf die Figur 7 beschrieben wird. Hierdurch kann eine besonders große Flexibilität bei zugleich verhältnismäßig großem Leitungsquerschnitt erreicht werden.

Selbstverständlich können auch andere Kabel erfindungsgemäß in die Formmasse beim Herstellen des Innenverkleidungsbauteils durch Umspritzen beziehungsweise Umgießen integriert werden, welche Leiter mit einem anderen Querschnitt, beispielsweise einem runden Querschnitt, aufweisen.

Insbesondere erfolgt die elektrische (oder optische) Kontaktierung der elektrischen (oder optischen), in der Formmasse des Bauteils eingebetteten Leiter direkt, ohne Zwischenschaltung einer Steckverbindung, wie zum Beispiel eines Elektrosteckers, wie beispielsweise oben mit Bezug auf den Stand der Technik beschrieben wurde und in der Figur 1 dargestellt ist. *Beispielsweise kann ein Verbraucher, eine Stromquelle, eine Steuereinrichtung, wie beispielsweise ein Steuergerät oder ein Schalter beziehungsweise Taster, oder allgemein eine beliebige Komponente ohne Zwischenschaltung eines separaten Steckerbauteils an dem in der Formmasse des Bauteils eingebetteten Leiter erfolgen. Insbesondere ist es nicht notwendig, den Leiter mit einem Ende aus der Formmasse herausstehen zu lassen, an welchem Ende anschließend eine Steckverbindung angeschlossen wird.*

*Besonders vorteilhaft kann die Formmasse, in welche der Leiter eingebettet ist, beispielsweise das Innenverkleidungsbauteil des Fahrzeugs, zugleich eine Aufnahmevorrichtung für die anzuschließende und mit dem Leiter zu kontaktierende Komponente ausbilden.*

Vorteilhaft wird das in das Formnest, insbesondere vor dem Einbringen der Formmasse, eingebrachte Kabel zuvor, das heißt vor seinem Einbringen in das Formnest, auf eine vorgegebene Länge gebracht, entweder unmittelbar auf die Länge extrudiert oder auf diese Länge gekürzt, wobei diese vorgegebene Länge vorteilhaft der endgültigen Länge des Kabel entspricht, das heißt, nach dem Einbringen des Kabels in das Formnest werden keine weiteren Kürzungen des Kabels vorgenommen.

Um eine Kontaktierung der Leiter in dem Kabel zu ermöglichen, kann das Kabel entweder zunächst vollständig mit der Formmasse umspritzt werden und anschließend ein Bereich der Formmasse entfernt werden, zum Beispiel durch mechanische Bearbeitung wie Schleifen, Fräsen und dergleichen, oder durch eine chemische Bearbeitung wie Ätzen. Auch ein physikalisches Entfernen, wie mittels Laser oder durch Sputtern, ist möglich. Alternativ und vorteilhaft wird jedoch beim Umspritzen des Kabels mit der Formmasse wenigstens ein vorgegebener Abschnitt des Kabels von der Formmasse dadurch freigehalten, dass dieser Abschnitt des Kabels an dem Spritzgusswerkzeug anliegend positioniert wird. Anliegen an dem Spritzgusswerkzeug im Sinne der vorliegenden Erfindung bedeutet dabei nicht nur das unmittelbare Anliegen des entsprechenden Abschnittes an dem Spritzgusswerkzeug selbst, sondern es können auch Dummy-Elemente beziehungsweise Platzhalter oder Formkerne in das Formnest eingesetzt werden, welche von dem von Formmasse freizuhaltenden Abschnitt bis zum Rand des Formnests und damit dem Spritzgusswerkzeug selbst reichen und so verhindern, dass der vorgegebene Abschnitt mit Formmasse benetzt wird.

Ein unmittelbares Anlegen des freizuhaltenden Abschnittes an dem Spritzgusswerkzeug selbst, ist natürlich möglich.

Ein vollständiges Umspritzen im Sinne der vorliegenden Erfindung schließt jedoch insbesondere nicht aus, dass einzelne punktuelle oder lineare Oberflächenbereiche des Kabels deswegen nicht von der Formmasse benetzt werden können, weil geeignete Einrichtungen zum Halten des Kabels vor und bei dem Umspritzen im Spritzgusswerkzeug vorgesehen sind. Die wird weiter unten noch näher beschrieben.

Zur Kontaktierung der im Kabel verlaufenden elektrischen oder optischen Leiter wird das Kabel vorteilhaft nach seiner Einbettung in der Formmasse, und insbesondere nachdem es aus dem Spritzgusswerkzeug zusammen mit der wenigstens teilweise ausgehärteten Formmasse entnommen worden ist, im Bereich der vorgegebenen, von der Formmasse nicht benetzten Abschnitte oder freigelegten Abschnitte derart abisoliert, dass alle in diesem Abschnitt verlaufenden oder ausgewählte Leiter in dem Kabel zur elektrischen und/oder optischen Kontaktierung freigelegt werden.

Das Spritzgusswerkzeug kann beispielsweise mit wenigstens einem integralen oder an diesem montierten Vorsprung versehen werden, welcher in das Formnest derart hineinragt, dass eine Aussparung beim Formen des Bauteils in diesem Bauteil ausgebildet wird, an deren Grund das Kabel gegenüber der Umgebung frei liegt. Dabei kann das Kabel beispielsweise beidseitig oder außerhalb des gesamten Umfangs des Vorsprungs zumindest in der Nähe des Vorsprungs oder auch insgesamt in einer einzigen Ebene in dem Formnest verlaufen.

Alternativ ist es möglich, das Kabel derart in das Formnest des Spritzgusswerkzeuges einzubringen, dass es einen Vorsprung oder eine Stufe ausbildet. Dieser Vorsprung oder die Stufe kann mit ihrer äußeren Oberfläche unmittelbar an dem Spritzgusswerkzeug, oder wie oben beschrieben an einem Platzhalter oder Kern, anliegen, so dass der vorgegebene Abschnitt frei von einer Benetzung durch die Formmasse gehalten wird. Insbesondere können dann zumindest die beiden sich gegenüberstehenden flächigen Oberflächen des Spritzgusswerkzeuges, die das Formnest begrenzen, weitgehend oder vollständig eben oder zumindest frei von Vorsprüngen, Aussparungen oder Sprungstellen ausgebildet werden, die insbesondere zum Freilegen des eingebetteten Kabels dienen.

Im Bereich des zur Kontaktierung freigehaltenen oder freigelegten Abschnittes können an dem Bauteil Vorsprünge und/oder Aussparungen oder einfach auch nur Außenflächen aus Formmasse ausgebildet werden, welche mit einem Kabelverbinder, der an einem externen Kabel anschließbar oder angeschlossen ist, eine Schnappverbindung ausbilden. Somit kann ein solcher Kabelverbinder lösbar oder auch unlösbar, formschlüssig an dem Bauteil mit dem integrierten Kabel angeschlossen werden, um die Leiter des externen Kabels an die freigelegten Kontaktstellen der Leiter des eingebetteten Kabels anzulegen oder anzupressen, um somit einen leitenden Kontakt herzustellen.

Insbesondere kann somit eine elektrisch leitende und/oder optisch leitende Verbindung zwischen den Leitern des durch Einbettung in der Formmasse fixierten Kabels und den Leitern des externen Kabels hergestellt werden, ohne dass eine Steckverbindung, das heißt insbesondere eine Verbindung mit zusammensteckbaren Hülsen und Stiften, verwendet wird.

Unter einem Aspekt betrifft die vorliegende Erfindung ein Bauteil für eine Fahrzeuginnenverkleidung oder allgemein eine Innenverkleidung, welches gemäß dem oben beschriebenen Verfahren herstellbar oder hergestellt ist, und welches eine Formmasse aufweist, die den Grundkörper des Bauteils ausbildet, insbesondere aus spritzgegossenem Kunststoff, in welche ein Kabel mit einem oder einer Vielzahl von elektrisch und/oder optischen Leitern eingebettet und wenigstens teilweise formschlüssig umschlossen ist. Somit kann das Kabel ausschließlich durch Umspritzen mit Formmasse in dem Bauteil gehalten werden, ohne dass eine Klemmverbindung, Rastverbindung, Steckverbindung oder Klebverbindung zwischen dem Kabel und dem Bauteil beziehungsweise der Formmasse desselben vorgesehen wird.

Das erfindungsgemäße Bauteil kann beispielsweise eine Fahrzeugtürinnenverkleidung sein und weist vorteilhaft die oben beschriebenen vorgegebenen Abschnitte zur Kontaktierung auf.

Die Erfindung soll nachfolgend anhand eines Ausführungsbeispiels und den Figuren exemplarisch beschrieben werden.

Es zeigen:
- Figur 1: eine Ausführung mit einer Steckverbindung gemäß dem Stand der Technik;
- Figur 2: zwei Beispiele für das Einbringen eines Kabels in ein Formnest;
- Figur 3: eine Draufsicht auf ein erfindungsgemäß hergestelltes Bauteil mit einem zur Kontaktierung freigelegten Abschnitt des eingebetteten Kabels;
- Figur 4: die abisolierten Kontaktstellen in einem freigelegten Abschnitt;
- Figur 5: ein externes Kabel mit einem Kabelverbinder, der in einer Schnappverbindung mit dem erfindungsgemäß hergestellten Bauteil verbunden ist;
- Figur 6: eine Fahrzeugtürinnenverkleidung mit freigelegten Abschnitten zum Einsetzen und Kontaktieren von Verbrauchern, hier einer Ausstiegsbeleuchtung und eines Lautsprechers;
- Figur 7: einen Querschnitt durch ein flexibles Flachkabel, das erfindungsgemäß in eine Innenverkleidung integriert werden kann;
- *Figur 8*: *ein Bauteil mit einem darin eingebetteten Kabel, gesehen von der Rückseite des Bauteils aus;*
- *Figur 9*: *das Bauteil aus der Figur 8, gesehen von der Vorderseite des Bauteils aus, auf welcher eine Komponente mit elektrischen Leitern derart im Bauteil einrastend angeschlossen wird, dass die elektrischen Leiter die freigelegten Kontaktstellen der Leiter des eingebetteten Kabels kontaktieren.*

In der Figur 2 erkennt man je zwei Hälften eines Spritzgusswerkzeuges 10, welche gemeinsam ein Formnest 11, auch Formenhohlraum genannt, ausbilden. In dem Formnest 11 wird durch Einspritzen einer Formmasse 12 ein Bauteil 1 für eine Innenverkleidung geformt, dadurch, dass die eingespritzte Formmasse 12 in dem Formnest 11 sich vernetzt und aushärtet.

Vor dem Einspritzen der Formmasse 12 wird in das Formnest 11 das in das Bauteil 1 zu integrierende Kabel 2 eingelegt, welches somit durch Einspritzen der Formmasse 11 vollständig formschlüssig in dem Bauteil 1 integriert wird.

Ausschließlich ein vorgegebener Abschnitt 5 des Kabels 2 berührt das Spritzgusswerkzeug 10, so dass dieser Abschnitt 5 nicht oder im wesentlichen nicht von der Formmasse 12 benetzt werden kann und nach dem Aushärten der Formmasse 12 und dem Herausnehmen des Bauteils 1 aus dem Spritzwerkzeug 10 gegenüber der Umgebung frei liegt. Selbstverständlich ist es möglich, geeignete Einrichtungen (nicht gezeigt) in dem Spritzgusswerkzeug vorzusehen oder auszubilden, mit denen das Kabel, vor dem und bei dem Umspritzen mit Formmasse an seiner Position innerhalb des Formnestes gehalten wird. Solche Einrichtungen werden jedoch keine mit dem Abschnitt 5 vergleichbare flächigen Bereiche des Kabels 2 vor einer Benetzung durch die Formmasse 12 schützen, sondern eher punktuelle oder lineare Schnittstellen mit dem Kabel 2 ausbilden. Auch ist es möglich, an dem Kabel 2 Abstandshalter (nicht dargestellt) aus Kunststoff, insbesondere dem Werkstoff der Formmasse 12, zu befestigen, welche das Kabel 2 an dem Spritzgusswerkzeug abstützen und somit in der gewünschten Position halten. Diese Abstandshalter werden dann beim Einbringen der Formmasse 12 in das Formnest 11 von der Formmasse umschlossen.

Gemäß der linken Darstellung in der Figur 2 wird das Anliegen des vorgegebenen Abschnittes 5 des Kabels 2 unmittelbar an dem Spritzgusswerkzeug 10 dadurch erreicht, dass die eine Hälfte, hier die obere Hälfte, des Spritzgusswerkzeuges 10 mit einem integralen Vorsprung 13 versehen ist, der in das Formnest 11 bis zu dem Kabel 2 hineinragt.

Bei der rechts in der Figur 2 dargestellten Ausführung weist das Spritzgusswerkzeug 10 im Bereich des vorgegebenen Abschnittes 5 des Kabels 2, welcher zur Kontaktierung nach der Herstellung des Formteils 1 frei liegen soll, eine ebene, das Formnest 11 begrenzende Oberfläche auf. Um ein Anliegen des Kabels 2 unmittelbar an dem Spritzgusswerkzeug 10, nämlich an der ebenen Oberfläche desselben, zu erreichen, ist das Kabel 2 derart in das Formnest 11 eingelegt, dass es einen Vorsprung 6, umfassend zwei entgegengesetzt zueinander gerichtete Stufen, ausbildet, mit welchem es unmittelbar am Spritzgusswerkzeug 10 anliegt. Alternativ wäre es auch möglich, das Kabel 2 mit nur einer einzigen Stufe zu versehen, so dass das Kabel 2 beginnend mit dieser Stufe bis zum entsprechenden Ende des Formnestes 11 an dem Spritzgusswerkzeug 10 anliegt.

Bei der in der Figur 2 dargestellten Ausführung können die vorbereiteten flexiblen Flachkabel (FFC) gleich mit ihrer endgültigen Länge, inklusiv ihrer Matrix in das Spritzgusswerkzeug 10 für die Innenverkleidung eingelegt und mit der Formmasse 12, insbesondere Kunststoff als Trägermaterial, vollständig umspritzt werden. *Unter Matrix versteht man den mechanischen und elektrischen Verbund von zwei oder mehr Flachleitern.*

In der Figur 3 ist eine Draufsicht auf ein erfindungsgemäß ausgeführtes Bauteil 1 im Bereich des freigelegten Abschnittes 5 und die Umgebung dieses Bereiches gezeigt. Wie man sieht ist das Kabel 2 zunächst vollständig formschlüssig umschlossen in der Formmasse 12 eingebettet, bevor der freiliegende oder freigelegte Abschnitt 5 beginnt, in welchem die Leiter vollständig oder teilweise abisoliert werden können, beispielsweise durch Fräsen, mit Laser, durch chemische Behandlung etc.

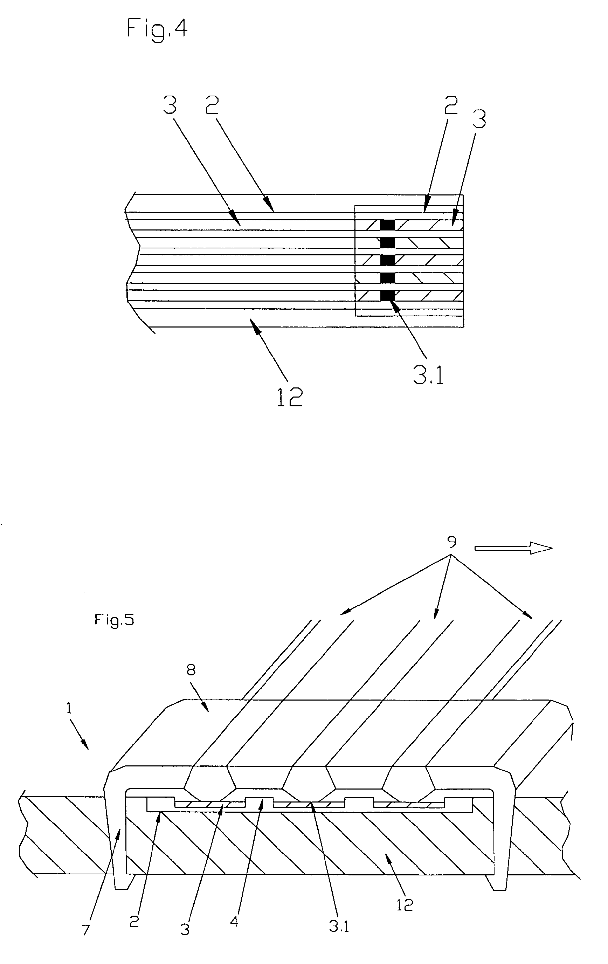

In der Figur 4 sind beispielhaft einzelne freigelegte Kontaktstellen 3.1 der Leiter 3 in dem Kabel 2 dargestellt, welche eine elektrisch und/oder optisch leitende Verbindung für die Leiter eines von außen aufgesetzten Kabels zur Verfügung stellen. Für die Kontaktierung gibt es verschiedene Möglichkeiten, beispielsweise Klemmen, Löten, Schweißen, Crimpen etc. Es ist jedoch vorteilhaft kein Stecker zur Kontaktierung notwendig, das heißt keine Verbindung, bei der ein Teil der Leiter beziehungsweise ein an diesen angeschlossener Stift von einer Hülse umschlossen wird.

In der Figur 5 ist ein Beispiel für den Anschluss und die elektrische Kontaktierung eines externen Kabels 8 mit einer Vielzahl von elektrischen Leitern 9 mittels eines Kabelverbinders 7, der beispielsweise aus Kunststoff ausgebildet ist, gezeigt. Der Kabelverbinder 7 weist Vorsprünge auf, welche die Formmasse 12 des Bauteils 1 in einer Rastverbindung formschlüssig umschließen. Die Positionierung des Kabelverbinders 7 erfolgt dabei derart, dass Anschlussbereiche der Leiter 9 gegen die freigelegten Kontaktstellen 3.1 der Leiter 3 des Kabels 2 drücken und eine elektrische Verbindung herstellen.

Wie durch den Pfeil angedeutet wird, führen die Leiter 9 beispielsweise zu einem außerhalb des Bauteils 1 oder an einer anderen Stelle desselben montierten Verbrauchers oder Steuergeräts oder Energiequelle.

In der Figur 6 ist schematisch ein Bauteil 1 in Form einer Kraftfahrzeugtürinnenverkleidung dargestellt. Das Bauteil 1 umfasst einen Grundkörper 20, der aus der Formmasse 12 gebildet ist. In dem Grundkörper 20 sind Aussparungen vorgesehen, von denen einige Abschnitte des oder der eingebetteten Kabel 2 oder zumindest der Leiter 3 in den Kabeln 2 freigelegt sind. In die links unten dargestellte Aussparung kann beispielsweise ein elektrisches Beleuchtungselement wie eine Ausstiegsbeleuchtung oder dergleichen eingesetzt werden und durch das Einsetzen mit entsprechenden Kontaktflächen an dem eingesetzten Element unmittelbar mit den Leitern 3 elektrisch verbunden werden.

In die unten rechts in der Figur 6 dargestellte Aussparung kann beispielsweise entsprechend ein Lautsprecher eingesetzt werden.

Die Figur 7 zeigt den Querschnitt eines vorteilhaft ausgestalteten Kabels 2, das erfindungsgemäß in ein Innenverkleidungsbauteil integriert werden kann. Das Kabel 2 weist einen rechteckigen Querschnitt auf und umfasst eine Vielzahl von Leitern 3, welche ebenfalls einen rechteckigen Querschnitt aufweisen und durch eine Kunststoffschicht 4, welche insbesondere homogen ausgebildet ist, verbunden und umschlossen werden. Wie man sieht, weist das Kabel 2 genau wie die Leiter 3 einen Querschnitt mit einer wesentlich größeren Breite als Höhe auf, wodurch eine besondere Flexibilität senkrecht zu der Ebene der Breitenrichtung (in die Dickenrichtung) erzielt wird.

Die Leiter 3 können, wie oben beschrieben worden ist, entsprechend zumindest an vorgegebenen Kontaktstellen freigelegt und mit einem Verbraucher oder dergleichen direkt leitend verbunden werden, oder durch einen oder mehrere weitere zwischengeschaltete Leiter, wie Rundleiter oder Flachleiter, leitend verbunden werden.

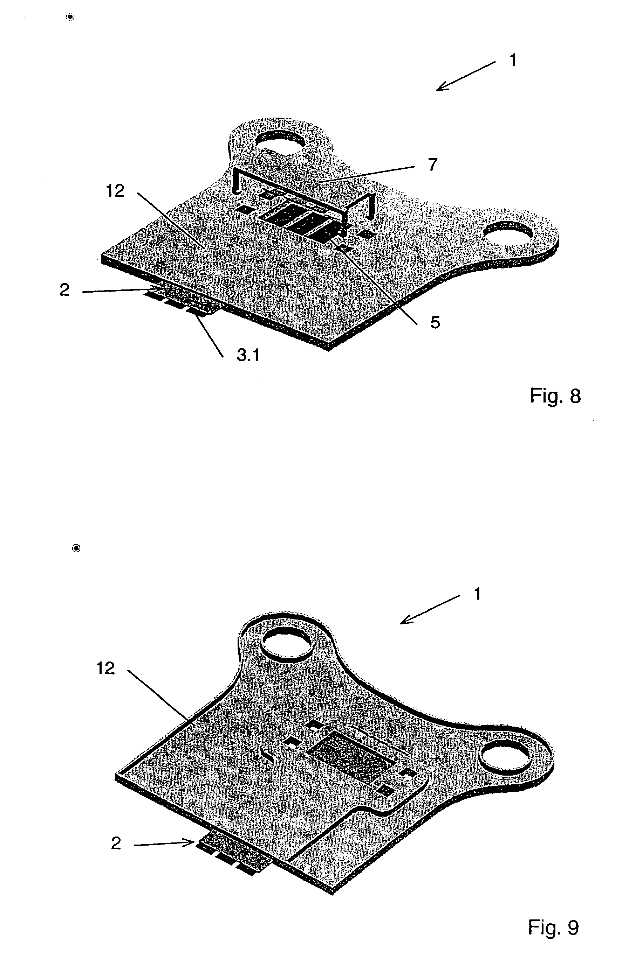

*In den Figuren 8 und 9 ist ein weiteres Ausführungsbeispiel für ein Bauteil 1 aus spritzgegossener Kunststoffformmasse 12 mit einem darin eingebetteten Kabel 2, umfassend eine Vielzahl von Leitern 3, dargestellt. In der Figur 8 ist das Bauteil von seiner Rückseite aus und in der Figur 9 von seiner Vorderseite aus dargestellt.*

*Wie man in der Figur 8 sieht, ist das Kabel 2 in einem verdickten Bereich des Bauteils 1 eingebettet, so dass es bis auf seine beiden axialen Enden vollständig mit Ausnahme von einem vorgegebenen Durchbruch in dem Bauteil 1 von der Formmasse 12 umschlossen wird. Der Durchbruch, der hier einen rechteckigen Querschnitt aufweist, dient dazu, die Leiter 3 des Kabels 2 zu kontaktieren.*

*Seitlich neben dem Durchbruch, in welchem der freigelegte Abschnitt 5 der Leiter 3.1 positioniert ist, sind vier weitere, vorliegend ebenfalls rechteckige oder quadratische Durchbrüche in dem Bauteil 1 vorgesehen, welche dazu dienen, die gezeigten Anschlussfüße des Kabelverbinders 7 aufzunehmen, die dadurch, dass sie durch diese Durchbrüche hindurchgeführt werden, am Bauteil 1 einrasten können.*

*In dem eingerasteten Zustand des Kabelverbinders 7 stehen die elektrischen Leiter 9, die auf der Unterseite des Kabelverbinders 7 herausragen, in einem elektrisch leitenden Eingriff mit den Kontaktstellen 3.1 der Leiter 3 des in dem Bauteil 1 eingebetteten Kabels* 2.

*Aufgrund der erfindungsgemäßen und insbesondere in den Figuren gezeigten im wesentlichen vollständigen Umspritzung des Kabels, insbesondere Flachkabels, wobei vorteilhaft zugleich mechanische Anschlüsse für eine Komponente, die mit den freiliegenden oder freigelegten Leitern kontaktiert werden soll, vorgesehen sind, ist es nicht notwendig, den Leiter aus dem Bauteil 1 derart herauszuführen, dass an ihm ein konventioneller Stecker angeschlossen werden kann. Vielmehr kann auf einen solchen konventionellen Stecker und den Arbeitsschritt des Anschlusses desselben verzichtet werden.*

*Das Kabel braucht lediglich wenigstens teilweise oder vollständig mit der Formmasse des Bauteils, in welches es eingebettet werden soll, umspritzt werden, wobei anschließend die Leiter des Kabels, beispielsweise Kupferbahnen, an einer gewünschten Stelle freigelegt werden, oder diese gewünschte Stelle direkt beim Umspritzen des Leiters freigehalten wird.*

*Insbesondere beim Ausführen der Leiter des Kabels als Flachleiter ist durch die Möglichkeit, eine entsprechend große Anschlussfläche für jeden Leiter freizulegen, eine besonders sichere Kontaktierung möglich.*

## Patentansprüche

1. Verfahren zum Herstellen eines Bauteils (1) für eine Fahrzeuginnenverkleidung, insbesondere eine Türinnenverkleidung, wobei in das Formnest (11) eines Spritzgusswerkzeugs (10) wenigstens ein flexibles Kabel (2) mit einem oder einer Vielzahl von elektrischen und/oder optischen Leitern (3) eingebracht wird, worauf in das Formnest (11) eine Formmasse (12), aus welcher das Bauteil (1) geformt werden soll, eingebracht und im Formnest (11) vernetzt und/oder wenigstens teilweise oder vollständig ausgehärtet wird, wobei der Bauteil (1) wenigstens teilweise formschlüssig von der vernetzenden und/oder aushärtenden Formmasse (12) umschlossen wird, **dadurch gekennzeichnet,**
- **dass** als Kabel (2) ein flexibles Flachkabel, insbesondere in Bandform, vorzugsweise mit rechteckigem Querschnitt, eingesetzt wird, welches insbesondere eine Vielzahl von elektrischen Leitern (3) aufweist, die elektrisch isoliert und miteinander durch eine, insbesondere klebstofffreie, Kunststoffschicht (4) zu einem Band verbunden sind und
- **dass** entweder das Flachkabel (2) vollständig, insbesondere vollständig formschlüssig, von der Formmasse (12) umschlossen wird und nach dem Vernetzen und/oder Aushärten wenigstens eine vorgegebene Fläche der Formmasse (12) derart mechanisch und/oder physikalisch und/oder chemisch entfernt wird, dass wenigstens ein vorgegebener Abschnitt (5) des Kabels (2) freigelegt wird oder dass das Flachkabel (2) bis auf wenigstens einen vorgegebenen Abschnitt (5), der anliegend an dem Spritzgusswerkzeug (10) derart positioniert wird, dass die anliegende Fläche des Abschnittes (5) frei von der Formmasse (12) bleibt, vollständig von der Formmasse (12), insbesondere vollständig formschlüssig, umschlossen wird.

2. Verfahren nach Anspruch 1, **dadurch gekennzeichnet, dass** das Flachkabel (2) vor dem Einbringen in das Formnest (11) auf eine vorgegebene Länge, insbesondere seine endgültige Länge, gebracht, insbesondere geschnitten, wird.

3. Verfahren nach Anspruch 1 oder 2, **dadurch gekennzeichnet, dass** nach dem Umschließen des Flachkabels (2) mit der Formmasse (12) vorgegebene, freiliegende oder freigelegte Bereiche des Flachkabels (2) abisoliert werden, so dass alle oder ausgewählte Leiter (3) in dem Flachkabel (2) zur elektrischen und/oder optischen Kontaktierung freigelegt werden.

4. Verfahren nach einem der Ansprüche 1 bis 3, **dadurch gekennzeichnet, dass** das Spritzgusswerkzeug (10) mit wenigstens einem Vorsprung (13) versehen wird, an welchem das Flachkabel (2) anliegend positioniert wird, so dass in dem Bauteil (1) wenigstens eine Aussparung ausgebildet wird, an deren Grund das Flachkabel (2) freiliegt.

5. Verfahren gemäß einem der Ansprüche 1 bis 4, **dadurch gekennzeichnet, dass** das Flachkabel (2) derart in das Spritzgusswerkzeug (10) eingelegt wird, dass es einen Vorsprung (6) oder eine Stufe ausbildet, der/die mit seiner/ihrer äußeren Oberfläche den am Spritzgusswerkzeug (10) anliegenden Abschnitt (5) ausbildet.

6. Verfahren gemäß einem der Ansprüche 1 bis 5, **dadurch gekennzeichnet, dass** im Bereich des Abschnittes (5) Vorsprünge und/oder Aussparungen und/oder Außenflächen an dem Bauteil (1) aus Formmasse (12) ausgebildet werden, welche mit einem Kabelverbinder (7) eine Schnappverbindung ausbilden.

7. Verfahren gemäß einem der Ansprüche 1 bis 6, **dadurch gekennzeichnet, dass** ein externes Flachkabel (8) mit wenigstens einem elektrischen und/oder optischen Leiter (9) oder einer Vielzahl von elektrischen und/oder optischen Leitern (9) derart am Bauteil (1) angeschlossen wird, dass seine freien Leiterenden in einem elektrischen und/oder optischen Kontakt an den Leitern (3) des von der Formmasse (12) umschlossenen Flachkabels (2) anliegen, wobei gegebenenfalls die Verbindung zwischen den Leitern (3, 9) der beiden Flachkabel (2, 8) frei von einer Steckverbindung ist.

8. Bauteil (1) für eine Fahrzeuginnenverkleidung, vorzugsweise Fahrzeuginnentürverkleidung, insbesondere hergestellt gemäß dem Verfahren nach einem der Ansprüche 1 bis 7, umfassend einen Grundkörper (20), der aus einer Formmasse (12) gebildet ist, und wenigstens ein Kabel (2) mit einer Vielzahl von elektrischen und/oder optischen Leitern (3), **dadurch gekennzeichnet,**
- **dass** als Kabel (2) ein flexibles Flachkabel, insbesondere in Bandform, vorzugsweise mit rechteckigem Querschnitt, eingesetzt wird, welches insbesondere eine Vielzahl von elektrischen Leitern (3) aufweist, die elektrisch isoliert und miteinander durch eine, insbesondere klebstofffreie, Kunststoffschicht (4) zu einem Band verbunden sind,
- **dass** das Flachkabel (2) wenigstens teilweise formschlüssig von der Formmasse (12) des Grundkörpers (20) umschlossen und somit integral in der Formmasse (12) eingebettet mit dem Grundkörper (20) verbunden ist, und
- **dass** diese Verbindung frei von einer lösbaren Klemmverbindung, Rastverbindung oder Steckverbindung und frei von einer Klebverbindung ist.

9. Bauteil (1) gemäß Anspruch 8, **dadurch gekennzeichnet, dass** das Flachkabel (2) bis auf wenigstens einen vorgegebenen Abschnitt (5), welcher zur elektrischen und/oder optischen Kontaktierung freigelegte Kontaktstellen (3.1) der Leiter (3) des Flachkabels trägt, von der Formmasse (12) des Grundkörpers (20) vollständig, insbesondere vollständig formschlüssig, umschlossen ist.

10. Bauteil nach Anspruch 9, **dadurch gekennzeichnet, dass** der Abschnitt (5) durch Entfernung von Formmasse (12) oder durch Nichteinbringen von Formmasse in bzw. auf diesen Abschnitt (5) ausgebildet ist.
